# EUROPÄISCHE PATENTSCHRIFT

(11) **EP 3 893 309 B1**
(45) Veröffentlichungstag und Bekanntmachung des Hinweises auf die Patenterteilung: **03.05.2023**
(21) Anmeldenummer: 21175302.5
(22) Anmeldetag: 20.03.2019
(51) Int. Cl.: H01M 10/0562, H01M 4/04, H01M 4/139, H01M 10/0525, H01M 4/02

(54) **FESTSTOFF-ELEKTROLYTMATERIAL FÜR ELEKTROCHEMISCHE SEKUNDÄRZELLE**
SOLID ELECTROLYTE MATERIAL FOR ELECTROCHEMICAL SECONDARY CELL
MATIÈRE ÉLECTROLYTIQUE SOLIDE POUR CELLULE ÉLECTROCHIMIQUE SECONDAIRE

(30) Priorität: 11.04.2018 DE 102018205483
(43) Veröffentlichungstag der Anmeldung: 13.10.2021
(62) Teilanmeldung aus: 19714138.5
(73) Patentinhaber: Bayerische Motoren Werke Aktiengesellschaft, 80809 München (DE)
(72) Erfinder: Woehrle, Thomas, 80637 München (DE)

(56) Entgegenhaltungen:
- DE-A1-102014 206 829
- DE-A1-102016 216 549
- US-A1- 2014 287 305

## Beschreibung

Die Erfindung betrifft ein Verfahren zur Herstellung einer Elektrode für eine elektrochemische Sekundärzelle.

Nach dem Stand der Technik sind Feststoffseparatoren für Gasdiffusionselektroden bekannt, wobei das Feststoffseparatormaterial durchgängige Kanäle aufweist (siehe Dokument EP 1345280 A1). Außerdem sind Lithium(Li)-lonen leitende Feststoffelektrolyte bekannt, die auch als Separator eingesetzt werden können. Das Dokument "All-Solid State Battery" von W. Weppner in Secondary Batteries - Lithium Rechargeable System, 2009, Elsevier zeigt einen schichtartigen Aufbau einer Li-lonen-Batterie mit einem Lithium-Ionen leitenden Feststoffelektrolytmaterial als Separator, der mittels Sputtering oder Aufdampftechniken präpariert wird.

Das Dokument DE 10 2014 206829 A1 befasst sich mit einer ionenleitenden Trägerstruktur aus Feststoffelektrolytmaterial für die Anode einer Li-lonen-Sekundärbatterie, wobei die Trägerstruktur mit einem Porenanteil von 10 - 90 % aus einer elektrisch nichtleitenden, Li-Ionen leitenden Keramik aufgebaut ist.

Aus dem Dokument US 2014/287305 A1 geht eine elektrisch nichtleitendende, Li-Ionen leitende Keramik für eine Li-lonen-Sekundärzelle hervor. Die Keramik weist zumindest einen porösen Abschnitt auf, der zumindest teilweise mit Elektrolytmaterial gefüllt ist.

Ferner zeigt das Dokument DE 10 2016 216549 A1 eine Verbundelektrode für eine Li-lonen-Sekundärzelle mit einer Matrix aus Feststoffelektrolytmaterial, wobei die Verbundelektrode durch Verpressen zumindest von Aktivmaterial mit dem Feststoffelektrolytmaterial hergestellt wird. Dabei entsteht implizit eine poröse Trägerstruktur aus Feststoffelektrolytmaterial, die ionenleitende Pfade innerhalb der Elektrode bereitstellt.

Es ist eine Aufgabe der Erfindung, ein verbessertes Verfahren zur Herstellung einer Elektrode für eine elektrochemische Sekundärzelle zu beschreiben.

Gelöst wird diese Aufgabe durch das Verfahren zur Herstellung einer Elektrode für eine elektrochemische Sekundärzelle nach Anspruch 1.

Das erfindungsgemäße Verfahren weist folgende Schritte auf:
∘ Bereitstellen eines Präkursormaterials für ein elektrisch nichtleitendes Feststoffelektrolytmaterial,
∘ Vermischen des Präkursormaterials mit einem elektrochemischen Aktivmaterial und optional mit elektrischem Leitmaterial wie Leitruß,
∘ Homogenisieren der Mischung aus dem Präkursormaterial und dem elektrochemischen Aktivmaterial,
∘ Verdichten der Mischung aus dem Präkursormaterial und dem elektrochemischen Aktivmaterial,
∘ Sintern der verdichteten Mischung zu einem gesinterten Verbund mit einer plattenförmigen Struktur oder Kalandrieren der verdichteten Mischung zu einem kalandrierten Verbund mit einer plattenförmigen Struktur,
∘ Aufbringen des Präkursormaterials auf eine erste Seite der plattenförmigen Struktur des gesinterten oder kalandrierten Verbunds und Verdichten des Präkursormaterials auf der plattenförmigen Struktur des gesinterten oder kalandrierten Verbunds zu einer Auflage von Präkursormaterial auf der plattenförmigen Struktur des gesinterten oder kalandrierten Verbunds,
∘ Sintern des gesinterten oder kalandrierten Verbunds mit der Auflage von Präkursormaterial,
∘ Aufdampfen einer Metallfolie (Vakuumverdampfen) auf einer zweiten Seite der plattenförmigen Struktur des gesinterten oder kalandrierten Verbunds oder Pressen des gesinterten oder kalandrierten Verbunds auf eine metallische Folie als Ableiter.

Als Ergebnis des Verfahrens wird eine Elektrode erreicht, auf deren Ableiter ein mit Feststoffelektrolytmaterial fest verbundenes Aktivmaterial aufgetragen ist, wobei das Feststoffelektrolytmaterial eine Trägermatrix für das Aktivmaterial bildet. Das Aktivmaterial ist in Poren des Feststoffelektrolytmaterials eingearbeitet. Der Porendurchmesser beträgt 10 nm bis 50 µm. Die Elektrode ist auf der von dem Ableiter abgewandten Seite zusätzlich mit weiterem Feststoffelektrolytmaterial bedeckt, das mit dem die Trägermatrix bildenden Feststoffelektrolytmaterial durch den zweiten Sintervorgang fest verbunden ist, jedoch keine Poren aufweist. Dieser Bereich bzw. Abschnitt des Elektrolytmaterials kann als Separator für die Elektrode dienen, wenn diese in einer elektrochemischen Sekundärzelle eingesetzt wird.

Vorteilhafterweise weist das elektrisch nichtleitende Feststoffelektrolytmaterial für eine elektrochemische Sekundärzelle Poren auf.

Es können Poren miteinander verbunden sein, wobei aber von Poren gebildete durchgängige Kanäle durch das Feststoffelektrolytmaterial optional sind. Ein bevorzugter Durchmesser einer Pore beträgt 10 nm bis 50 µm, wobei ein Bereich von 800 nm bis 30 µm für einen Einsatz in elektrochemischen Sekundärzellen wie etwa Li-lonen-Zellen besonders vorteilhaft ist.

Vorteilhafterweise umfasst eine Elektrode für eine elektrochemische Sekundärzelle ein solches elektrisch nichtleitendes Feststoffelektrolytmaterial sowie ein Aktivmaterial, wobei Partikel des Aktivmaterials die Poren einer ersten Teilmenge der Poren, die in einem ersten Abschnitt des elektrisch nichtleitenden Feststoffelektrolytmaterials befindlich sind, zumindest teilweise ausfüllen, und die Poren, die in einem zweiten Abschnitt des elektrisch nichtleitenden Feststoffelektrolytmaterials befindlich sind, unausgefüllt sind.

Das bedeutet, dass nicht alle Poren mit Partikeln des Aktivmaterials gefüllt sind, sondern lediglich Poren in einem bestimmten Abschnitt - in dem ersten Abschnitt - des Feststoffelektrolytmaterials. Die Poren in dem anderen Abschnitt - dem zweiten Abschnitt - des Feststoffelektrolytmaterials können unausgefüllt sein. Unausgefüllt bedeutet in diesem Zusammenhang, dass diese Poren mit einem gasförmigen Medium wie z.B. dem Edelgas Argon beladen sind. Der zweite Abschnitt, in dem die unausgefüllten Poren befindlich sind, weist also lonen-leitende und elektrisch nichtleitende Eigenschaften auf. Der Begriff "Ionenleitende Eigenschaft" und der Begriff "elektrisch nichtleitende Eigenschaft" bezieht sich auf die dem Fachmann geläufige Einordnung dieser Begriffe auf dem Gebiet der elektrochemischen Energiespeichertechnik. Dabei weist der Elektrolyt typischerweise (Li)-Ionen-Ieitende Eigenschaften und der Separator elektrisch nichtleitende Eigenschaften auf.

Der erste Abschnitt des Feststoffelektrolytmaterials mit der Teilmenge an Poren, die mit Partikeln des Aktivmaterials gefüllt sind, weist elektrische leitende Eigenschaften auf, da in diesem Bereich Partikel des Aktivmaterials, das elektrisch leitend ist, miteinander elektrisch leitend verbunden sind. Um die elektrisch leitende Eigenschaft des Aktivmateriales optional zu verstärken kann dem Aktivmaterial Leitruß und/oder Leitgraphit zugesetzt sein.

Vorteilhaft ist es zusätzlich, wenn die Elektrode auch Leitruß (und/oder Leitgraphit) umfasst und Partikel von Leitruß zumindest teilweise die Poren einer zweiten Teilmenge von Poren, die in dem ersten Abschnitt des elektrisch nichtleitenden Feststoffelektrolytmaterials befindlich sind, ausfüllen, und Partikel des Aktivmaterials und Partikel von Leitruß zumindest teilweise die Poren einer dritten Teilmenge von Poren, die in dem ersten Abschnitt des elektrisch nichtleitenden Feststoffelektrolytmaterials befindlich sind, ausfüllen.

Auf diese Weise wird erreicht, dass die elektrisch leitenden Eigenschaften im ersten Abschnitt des Feststoffelektrolytmaterials zusätzlich verbessert werden, da Poren im ersten Abschnitt mit Partikeln von Aktivmaterial, Partikeln von Leitruß oder mit beiden Partikelarten befüllt sein können. Dies schließt nicht aus, dass im ersten Abschnitt auch eine Teilmenge von Poren befindlich sein kann, die weder mit Partikeln von Aktivmaterial, noch mit Partikeln von Leitruß befüllt ist.

Vorteilhafterweise weist das elektrisch nichtleitende Feststoffelektrolytmaterial für eine elektrochemische Sekundärzelle nur abschnittsweise Poren auf, d.h. es ist in zumindest einem Abschnitt porenfrei. In dem porenfreien Abschnitt weist das Feststoffelektrolytmaterial seine kristallographische Dichte auf. Nach einer anderen Ausdrucksweise ist das Material in dem porenfreien Abschnitt kompakt.

Das Feststoffelektrolytmaterial weist also Abschnitte auf, in den es porös ist, und zumindest einen Abschnitt auf, in dem es nicht porös, d.h. kompakt ist. Vereinzelte, d.h. unzusammenhängende Poren, die etwa verbleiben, wenn das Material nicht durchgängig kompakt herstellbar ist, stellen im Rahmen dieser Offenbarung ebenfalls ein kompaktes Material dar.

Vorteilhafterweise umfasst eine Elektrode für eine elektrochemische Sekundärzelle ein solches teilweise unporöses Feststoffelektrolytmaterial sowie ein Aktivmaterial, wobei Partikel des Aktivmaterials zumindest teilweise die Poren einer ersten Teilmenge der Poren, die in dem porösen Abschnitt des elektrisch nichtleitenden Feststoffelektrolytmaterials befindlich sind, ausfüllen.

Eine Teilmenge von Poren im porösen Abschnitt des Feststoffelektrolytmaterials ist also zumindest teilweise mit Partikel von Aktivmaterial gefüllt, d.h. eine einzelne gefüllte Pore kann auch nur teilweise mit Aktivmaterial ausgefüllt sein. Es kann auch eine Teilmenge von Poren verbleiben, die von Aktivmaterial unausgefüllt sind. Der porenfreie Abschnitt des Feststoffelektrolytmaterials erfüllt sowohl die Funktion eines Li-Ionenleiters als auch die Funktion eines Separators.

Vorteilhafterweise umfasst eine Elektrode für eine elektrochemische Sekundärzelle auch Leitruß, wobei Partikel des Aktivmaterials zumindest teilweise die Poren einer ersten Teilmenge der Poren, die in dem porösen Abschnitt des elektrisch nichtleitenden Feststoffelektrolytmaterials befindlich sind, ausfüllen, Partikel von Leitruß zumindest teilweise die Poren einer zweiten Teilmenge der Poren, die in dem porösen Abschnitt des elektrisch nichtleitenden Feststoffelektrolytmaterials befindlich sind, ausfüllen und Partikel des Aktivmaterials und von Leitruß zumindest teilweise die Poren einer dritten Teilmenge der Poren, die in dem porösen Abschnitt des elektrisch nichtleitenden Feststoffelektrolytmaterials befindlich sind, ausfüllen.

Alternativen zum Leitruß sind im Zusammenhang dieser Offenbarung auch Leitgraphit, Carbon-Nano-Tubes oder andere metallische Zusätze wie etwa Nano-Wires.

In dem porösen Abschnitt des Feststoffelektrolytmaterials können sich die Poren also in vier Teilmengen aufteilen. Eine Teilmenge der Poren nimmt Partikel von Aktivmaterial auf, eine andere Teilmenge nimmt Partikel von Leitruß auf, eine weitere Teilmenge nimmt Partikel von Aktivmaterial und von Leitruß auf und die vierte Teilmenge von Poren bleibt unbefüllt. Idealerweise ist die Teilmenge von Poren mit Partikeln und Leitruß die überwiegende Teilmenge mit einem Anteil von > 90 % der Poren.

Es wird weiterhin eine elektrochemische Sekundärzelle beschrieben, die eine positive Elektrode mit einem positiven Ableiter (z.B. Aluminium-Folie), einem positiven Aktivmaterial und Leitruß umfasst, die eine negative Elektrode mit einem negativen Ableiter (z.B. Kupfer-Folie) mit einem negativen Aktivmaterial und mit Leitruß umfasst, und die als Separator ein elektrisch nichtleitendes Feststoffelektrolytmaterial umfasst, das in einem ersten und in einem dritten Abschnitt Poren aufweist und in einem zweiten Abschnitt, der an den ersten und an den zweiten Abschnitt angrenzt, porenfrei ist. Partikel des negativen Aktivmaterials füllen zumindest teilweise die Poren einer ersten Teilmenge der Poren, die in dem ersten Abschnitt des elektrisch nichtleitenden Feststoffelektrolytmaterials befindlich sind, aus. Partikel von Leitruß füllen zumindest teilweise die Poren einer zweiten Teilmenge der Poren, die in dem ersten Abschnitt des elektrisch nichtleitenden Feststoffelektrolytmaterials befindlich sind, aus und Partikel des negativen Aktivmaterials und von Leitruß füllen zumindest teilweise die Poren einer dritten Teilmenge der Poren, die in dem ersten Abschnitt des elektrisch nichtleitenden Feststoffelektrolytmaterials befindlich sind, aus. Partikel des positiven Aktivmaterials füllen zumindest teilweise die Poren einer ersten Teilmenge der Poren, die dem dritten Abschnitt des elektrisch nichtleitenden Feststoffelektrolytmaterials befindlich sind, aus. Partikel von Leitruß füllen die Poren einer zweiten Teilmenge der Poren, die in dem dritten Abschnitts des elektrisch nichtleitenden Feststoffelektrolytmaterials befindlich sind, zumindest teilweise aus und Partikel des positiven Aktivmaterials und Partikel von Leitruß füllen die Poren einer dritten Teilmenge der Poren, die in dem dritten Abschnitts des elektrisch nichtleitenden Feststoffelektrolytmaterials befindlich sind, zumindest teilweise aus. Der porenfreie zweite Abschnitt des Feststoffelektrolytmaterials liegt zwischen dem ersten Abschnitt und dem dritten Abschnitt des Feststoffelektrolytmaterials.

Auf diese Weise wird eine elektrochemische Sekundärzelle gebildet, die ein elektrisch nichtleitendes Feststoffelektrolytmaterial als Separator zwischen den beiden Elektroden aufweist. Das Material dient als Li-Ionenleiter, der jeweils elektrodennah Poren aufweist, in die Partikel des jeweiligen Aktivmaterials und Leitruß aufgenommen sind. Eine solche Sekundärzelle weist minimalste ionische Übergangswiderstände zwischen Aktivmaterial und Elektrolyt sowie - makroskopisch betrachtet - zwischen Komposit-Elektrode und Separator auf, da die wirksame Grenzfläche zwischen Aktivmaterial und Feststoffelektrolyt im Vergleich zu einer schichtartigen bzw. separaten Anordnung von Aktivmaterial und Elektrolytmaterial extrem vergrößert ist.

Die Erfindung beruht auf den nachfolgend dargelegten Überlegungen:
All-Solid-State-Lithium- bzw. Lithium-Ionen Zellen (ASS-LZ) sind für die Anwendung im Automotive-Umfeld attraktiv. Sie gelten als überaus sicher, da im Falle einer Zerstörung einer ASS-LZ (z.B. bei einem entsprechend schweren Unfallereignis mit mechanischen, thermischen oder elektrischem Stress) keine potenziell toxischen oder brennbaren Spezies entstehen oder freigesetzt werden können.

Konventionelle ASS-LZ weisen nach dem Stand der Technik Grenzflächen zwischen dem Aktivmaterial der positiven Elektroden und dem Separator bzw. zwischen dem Aktivmaterial der negativen Elektrode und dem Separator auf. Typischerweise bilden die Aktivmaterialien und das Separatormaterial planparallele Schichten mit entsprechenden Grenzflächen, die im Wesentlichen jeweils durch eine Ebene gebildet sind. Derartige intrinsische Grenzflächen haben den Nachteil, dass sie innerhalb der Zelle Übergangswiderstände bezüglich der Lithium (Li)-Ionenleitfähigkeit bilden. Die Li-Ionen müssen durch die Grenzflächen kinetisch schnell wandern können. Ansonsten treten Übergangspotentiale bzw. Überspannungen auf. Die Übergangspotentiale zwischen Elektroden und Separator sind unerwünscht, da sie die Reaktivität der Zelle hemmen. Im Ergebnis führt dies zu Leistungseinbußen z.B. beim Laden sowie dem Hochstromverhalten generell der ASS-LZ. Hohe Lade- und Entladeleistungen sind aber eine Schlüsseleigenschaft von ASS-LZ bei automotiven Anwendungen.

Es wird deshalb vorgeschlagen, anorganische, Li-Ionen leitende Festkörpermaterialien, die als Separator und Elektrolyt fungieren können, in einem festen Verbund mit den Aktivmaterialien, insbesondere dem kathodischen (positiven) Aktivmaterial, einzusetzen. Dabei ist der Separator im Bereich des Aktivmaterials der Elektrode porös, wobei die Poren des Separators, der zugleich die Funktion als Elektrolyt erfüllt, mit Partikeln des Aktivmaterials und optional zusätzlich mit Leitruß gefüllt sind. Zwischen den beiden Elektroden befindet sich ein Abschnitt des Separators, der entweder keine Poren oder mit Aktivmaterial und Leitruß ungefüllte Poren aufweist.

Es ist - mit anderen Worten - das Aktivmaterial in das Feststoffelektrolytmaterial eingebettet oder es sind - gemäß einer alternativen Betrachtungsweise - Zwischenräume im Aktivmaterial mit Feststoffelektrolytmaterial durchsetzt. Vorteilhaft an einer solchen Struktur ist, dass im Gegensatz zu einem Schichtaufbau von Aktivmaterial und Separator die Wechselwirkungsgrenzfläche zwischen Aktivmaterial und Feststoffelektrolyt vergrößert ist, so dass der Gesamtwiderstand für die lonenleitung minimiert ist. Es können Li-Ionen auch im "Inneren" der Aktivmaterialschicht in Wechselwirkung mit dem Feststoffelektrolyt treten und somit von Aktivmaterial und in das Feststoffelektrolytmaterial übergehen. Innerhalb des Feststoffelektrolytmaterials werden die Li-Ionen zum jeweils gegenpoligen Aktivmaterial geleitet, ohne den festen Strukturbereich des Feststoffelektrolytmaterials zu verlassen.

Eine solche Struktur kann auch als funktionalisierte Keramik oder Hybrid-Keramik bezeichnet werden. Für die Funktionalisierung steht das in die Poren eingebrachte Aktivmaterial. Zur Herstellung einer solchen Verbundstruktur von Aktivmaterial und Feststoffelektrolyt ist es erforderlich, eine poröse Struktur im Elektrolytmaterial zu schaffen, die geeignet ist, Aktivmaterial und/oder Leitruß aufzunehmen. Als Materialien für solche Feststoffelektrolyten kommen anorganisch, keramisch basierte Separatoren in Betracht. Präkursoren des Feststoffelektrolytmaterials werden hierzu mit Aktivmaterialpartikel vermischt und gesintert. Es ist eine Kombination mit allen gängigen Aktivmaterialarten denkbar wie etwa geschichtete Übergangsmetalloxide, Olivine oder Spinelle (kathodisch) und etwa Graphit, Silizium, metallisches Lithium, Lithium-Titanat (Li₄Ti₅O₁₂) oder Carbonmaterialien (anodisch).

Auf diese Weise geschaffene Strukturen sorgen für geringe ionische Übergangswiderstände beim Betrieb einer ASS-LZ und damit für eine hohe elektrische Leistungen und eine hohe Lebensdauer der ASS-LZ. Damit wird im Vergleich zu Zellen mit einem Schichtaufbau nach dem Stand der Technik die gravimetrische und volumetrische Leistungsdichte erhöht.

Im Folgenden wird dies anhand der beigefügten Zeichnungen näher beschrieben. Im Einzelnen zeigen schematisch
Fig. 1 Elektrisch nichtleitender Feststoffelektrolyt mit einem gefüllten Porenbereich und einem ungefüllten Porenbereich
Fig. 2 Elektrisch nichtleitender Feststoffelektrolyt mit einem gefüllten Porenbereich und einem porenfreien Bereich
Fig. 3 Elektrochemische Sekundärzelle mit einem mit positivem Aktivmaterial gefüllten Porenbereich, einem mit negativem Aktivmaterial gefülltem Porenbereich und einem dazwischenliegenden porenfreien Bereich.

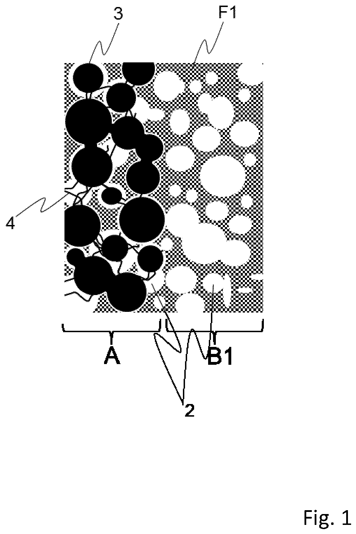

Es zeigt Fig. 1 das ein keramisches Feststoffelektrolytmaterial in Garnet-Struktur (F1), das Poren (2) mit einem Durchmesser von 800 nm bis 30 µm aufweist. Die Poren in einem ersten Bereich (A) sind mit dem positiven Aktivmaterial NMC (3) und mit Leitruß (4) gefüllt, wobei nicht alle Poren vollständig oder überhaupt ausgefüllt sind. Es ist jedoch ein Anteil von ca. 95 % der Poren in diesem Abschnitt zumindest teilweise gefüllt. In dem an den ersten Bereich (A) angrenzenden zweiten Bereich (B1) sind die Poren weder mit Aktivmaterialpartikel noch mit Leitruß gefüllt.

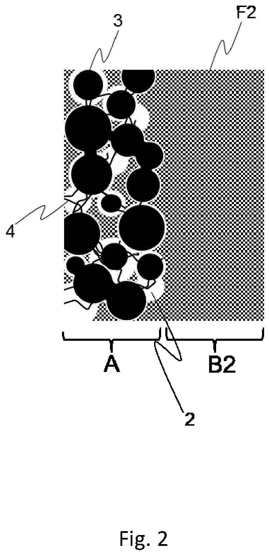

Fig. 2 und Fig. 1 unterscheiden sich dadurch, dass der an den ersten Bereich (A) angrenzende zweite Bereich (B2) des Feststoffelektrolytmaterials (F2) porenfrei ist.

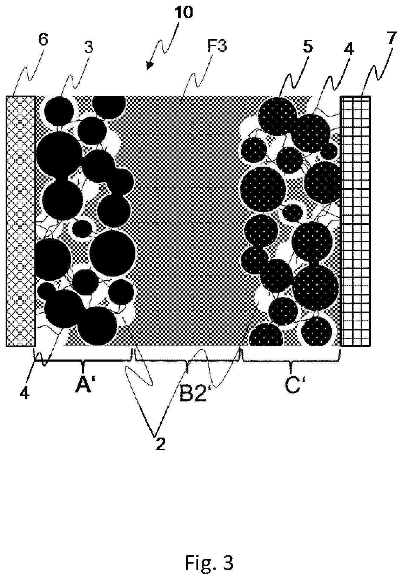

Fig. 3 zeigt eine Lithium-Ionen-Zelle (10) mit einem Kupfer-Ableiter (7) und einem Aluminium-Ableiter (6). Das keramische Feststoffelektrolytmaterial (F3) dient als Separator (B2`) zwischen dem negativen Aktivmaterial (5) und dem positiven Aktivmaterial (3). Das positive Aktivmaterial füllt mit Leitruß (4) Poren (2) im Feststoffelektrolytmaterial in einem Bereich (A`) nahe dem Aluminium-Ableiter, wodurch die positive Elektrode gebildet wird. Das negative Aktivmaterial Graphit sowie Leitruß füllen Poren aus, die nahe dem Kupfer-Ableiter in dem Bereich (C`) befindlich sind, wodurch die negative Elektrode gebildet wird. Der Bereich (B2') ist porenfrei und befindet sich zwischen den Bereichen (A`) und (C`) und übernimmt die Funktion eines Separators innerhalb der Zelle.

Eine Ausführungsform für das erfindungsgemäße Herstellverfahren einer Elektrode für eine Lithium-Ionen-Zelle ist wie folgt: Als Feststoffelektrolytmaterial in Garnet-Struktur wird das Material Li₇La₃Zr₂O₁₂ gewählt. Als Präkursormaterial für das Li₇La₃Zr₂O₁₂ wird eine Mischung aus Lanthan und Zirkon-Oxid eingesetzt werden. Falls es sich um die Herstellung einer Elektrode, die als Anode (negative Elektrode) z.B. in einer Li-lonen-Zelle eingesetzt wird, handelt, kommt synthetischer Graphit in Betracht. Falls es sich um die Herstellung einer Elektrode, die als Kathode (positive Elektrode) z.B. in einer Li-lonen-Zelle eingesetzt wird, handelt, kommt NMC111 in Betracht. Hierzu werden ca. 34 g des Präkursormaterials mit einem mittleren Korndurchmesser von 0,1 µm und ca. 98 g NMC111 mit einem mittleren Korndurchmesser von 9 µm zusammen mit ca. 3 g Leitruß vermischt und verdichtet. Für den Sintervorgang unter Stickstoffatmosphäre wird eine Temperatur von etwa 400-1200 °C über einen Zeitraum von etwa 24 h bei isostatischem Druck angefahren. Bei diesen Bedingungen bleibt das keramische Feststoffelektrolytmaterial in Garnet-Struktur stabil. Im Folgenden werden auf einer Seite der gesinterten Struktur ca. 50 g des Li₇La₃Zr₂O₁₂-Präkursormaterials aufgebracht, verdichtet und mit den obigen Parametern gesintert. Erhalten wird eine Elektrodenstruktur wie in Fig. 2 abgebildet. Im Falle der Herstellung einer Kathode wie in diesem Beispiel wird dann noch Aluminium als Ableitermaterial in Form einer Folie aufgedampft. Zum Verdampfen wird bevorzugt ein Vakuumverdampfer mit einer Schmelztanktemperatur im Bereich des Schmelzpunktes von Aluminium und einem Vakuum bei 10⁻³ mbar bis 1 mbar eingesetzt.

Alternative Feststoffelektrolytmaterialien für andere Ausführungsformen sind neben den Granaten auch Perovskite, Sulfide und Oxide. Besonders in Betracht kommen Strukturen, die abgeleitet sind von LISICON (Lithium (LI) Super (S) lonic (I) Conductor (CON)), beispielsweise Thio-LISICON Li₄₋ₓM_{1-y}M'_{y}S₄ mit M = Si, Ge, P, und M' = P, Al, Zn, Ga, Sb, oder NASISCON (Sodium (Na) Super (S) lonic (I) Conductor (CON)) der allgemeinen Formel AMM'P₃O₁₂ mit A = Li⁺, Na⁺, K⁺, Rb⁺, Cs⁺, Mg²⁺, Ca²⁺, Sr²⁺, Ba²⁺, H⁺, H₃O⁺, NH⁴⁺, Cu⁺, Ag⁺, Pb²⁺, Cd²⁺, Mn²⁺, Co²⁺, Mn²⁺, Co²⁺, Ni²⁺, Zn²⁺, Al³⁺, Ln³⁺, Ge⁴⁺, Zr⁴⁺, Hf⁴⁺ oder unbesetzt, M und M` = di-, tri-, tetra- oder pentavalente Übergangsmetallionen ausgewählt aus der Gruppe Zn²⁺, Cd²⁺, Ni²⁺, Mn²⁺, Co²⁺, Fe³⁺, Sc³⁺, Ti³⁺, V³⁺, Al³⁺, In³⁺, Ga³⁺, Y³⁺, Lu³⁺, Ti⁴⁺, Zr⁴⁺, Hf⁴⁺, Sn⁴⁺, Si⁴⁺, Ge⁴⁺, V⁵⁺, Nb⁵⁺, Ta⁵⁺, Sb⁵⁺, As⁵⁺ sein, wobei Phosphor auch teilweise durch Si oder As substituiert sein kann.

## Patentansprüche

1. Verfahren zur Herstellung einer Elektrode für eine elektrochemische Sekundärzelle mit den Schritten
- Bereitstellen eines Präkursormaterials für ein elektrisch nichtleitendes Feststoffelektrolytmaterial,
- Vermischen des Präkursormaterials mit einem elektrochemischen Aktivmaterial,
- Verdichten der Mischung aus dem Präkursormaterial und dem elektrochemischen Aktivmaterial,
- Sintern der verdichteten Mischung aus dem Präkursormaterial und dem elektrochemischen Aktivmaterial zu einem gesinterten Verbund mit einer plattenförmigen Struktur,
- Aufbringen des Präkursormaterials auf eine erste Seite der plattenförmigen Struktur und Verdichten des Präkursormaterials auf der plattenförmigen Struktur zu einer Auflage von Präkursormaterial auf der plattenförmigen Struktur,
- Sintern der plattenförmigen Struktur und der Auflage von Präkursormaterial,
- Aufdampfen einer Metallfolie auf einer zweiten Seite der plattenförmigen Struktur.

## Claims

1. Process for producing an electrode for a secondary electrochemical cell, comprising the steps of
- provision of a precursor material for an electrically non-conducting solid electrolyte material,
- mixing of the precursor material with an electrochemical active material,
- compaction of the mixture of the precursor material and the electrochemical active material,
- sintering of the compacted mixture of the precursor material and the electrochemical active material to give a sintered composite having a plate-like structure,
- application of the precursor material to a first side of the plate-like structure and compaction of the precursor material on the plate-like structure to give an applied layer of precursor material on the plate-like structure,
- sintering of the plate-like structure and the applied layer of precursor material,
- vapour-deposition of a metal foil on a second side of the plate-like structure.

## Revendications

1. Procédé de fabrication d'une électrode pour une cellule secondaire électrochimique, comportant les étapes suivantes
- fourniture d'un matériau précurseur pour une matière électrolytique solide électriquement non conductrice,
- mélange du matériau précurseur avec une matière active électrochimique,
- compression du mélange du matériau précurseur et de la matière active électrochimique,
- frittage du mélange comprimé sur le matériau précurseur et la matière active électrochimique pour obtenir un composé ayant une structure en forme de plaque,
- application du matériau précurseur sur une première face de la structure en forme de plaque et compression du matériau précurseur sur la structure en forme de plaque pour obtenir une couche de matériau précurseur sur la structure en forme de plaque,
- frittage de la structure en forme de plaque et de la couche du matériau précurseur,
- déposition en phase vapeur d'une feuille métallique sur une seconde face de la structure en forme de plaque.
